# EUROPEAN PATENT APPLICATION

(11) **EP 2 535 968 A1**
(43) Date of publication of application: **19.12.2012**
(21) Application number: 11742246.9
(22) Date of filing: 09.02.2011
(51) Int. Cl.: H01M 4/04, H01M 4/139, H01M 4/36

(54) **APPARATUS FOR PRODUCTION OF ELECTRODE MATERIAL**

(30) Priority: 09.02.2010 JP 2010026739
(71) Applicant: Mitsubishi Heavy Industries, Ltd., Tokyo 108-8215 (JP)
(72) Inventor: DOBASHI, Shinsaku, Tokyo 108-8215 (JP); TSUKAHARA, Chisato, Tokyo 108-8215 (JP); TATSUHARA, Kiyoshi, Tokyo 108-8215 (JP); TSURUMAKI, Shigeru, Tokyo 108-8215 (JP); AKIYAMA, Tomoo, Tokyo 108-8215 (JP)
(74) Representative: Henkel, Breuer & Partner
(86) International application number: PCT/JP2011/052711
(87) International publication number: WO 2011/099503

(57) **Abstract**

Disclosed is a sieve (31) including a mixing space (35), a sieving space (36) arranged on the mixing space (35), and a mixture transport space (37) arranged on the sieving space (36) formed therein. A mesh (23) for holding an active material (AM) in the mixing space (35) is arranged in the undermost part of the mixing space (35). A gas containing a powder of a conductive material (AB) is supplied from a lower part of the mesh (23) toward an upper part of the mesh (23) to float the active material (AM) placed on the mesh (23) and cause the collision between floating particles of the active material (AM) and particles of the conductive material (AB), thereby producing particles of a mixture. Among the particles of the mixture, particles having particle sizes equal to or smaller than a desired particle size range rise up from the mixing space (35) to the mixture transport space (37) through the sieving space (36), while particles having relatively large particle sizes do not reach the mixture transport space (37).

## Description

### [Technical Field]

The present invention relates to an apparatus for manufacturing an electrode material of a battery.
Priority is claimed on Japanese Patent Application No. 2010-26739, filed on February 9, 2010, the content of which is incorporated herein by reference.

### [Background Art]

In general, as disclosed in Patent Document 1, a positive electrode plate of a lithium ion battery is produced by mixing a powder of a lithium-metal complex oxide, which is an active material, with a powder of a conductive material including a powder of acetylene black, adding a binder and a solvent to the mixture and kneading the resultant mixture to make a slurry, and applying the slurry to an electrode core agent.

In addition, as disclosed in Patent Document 2, there is also provided a method of manufacturing a positive electrode including stirring and mixing a powder of a lithium-metal complex oxide, which is an active material, a powder of acetylene black, and a binder to make a compound, inserting the compound into a predetermined mold to be pressed to form a sheet, and then disposing the sheet at both surfaces of a core such as aluminum.

### [Prior Art Documents]

### [Patent Documents]

[Patent Document 1] Japanese Patent No.: 2750077
[Patent Document 2] Japanese Patent No.: 4219705

### [Summary of the Invention]

### [Problems to be Solved by the Invention]

However, in the above-mentioned method, performance of the electrode cannot be sufficiently drawn out. This is because, since the active material, the conductive material and the binder are introduced upon stirring/mixing, the binder is attached also to the active material and thus the conductive material can be attached only to a portion of a circumference of the active material, in other words, it is impossible to uniformly attach the conductive material substantially equally to the circumference of the active material.
Meanwhile, in dry mixing in which the active material and the conductive material are introduced into a container and a stirring blade is rotated, with no introduction of the binder, since a weight of the active material of the powder is different from a weight of the conductive material of the powder, even when the stirring blade is rotated in the container for a long time, the active material and the conductive material may not be evenly dispersed in the container, and it is difficult to uniformly attach the conductive material substantially equally to the circumference of the active material (hereinafter referred to as uniform mixing). Accordingly, performance of the battery may not be improved.

In consideration of the problems of the related art as described above, it is an object of the present invention to provide a technique capable of uniformly mixing an active material in a powder state and a conductive material in a powder state and improving battery performance.

### [Means for Solving the Problems]

An apparatus for manufacturing an electrode material in accordance with the present invention includes a first mixed gas blowing part configured to blow a first mixed gas, in which a conductive material powder is mixed with a first gas, at a predetermined pressure; an active material powder floating part configured to float an active material powder; a mixing part configured to spray the first mixed gas to the floated active material powder and to generate a mixture in which the conductive material powder is attached to the active material powder; and an extracting part configured to extract a mixture having a predetermined particle size from the mixture using a difference in precipitation speed according to the particle size.

### [Effects of the Invention]

According to the present invention, since the conductive material powder mixed in the gas is mixed with the active material powder in a floated state, the active material powder and the conductive material powder can be uniformly mixed. In addition, a mixture having a predetermined particle size can be efficiently obtained using a difference in precipitation speed. Accordingly, battery performance can be improved.

### [Brief Description of the Drawings]

FIG. 1 is a systematic view of a manufacturing apparatus in accordance with a first embodiment of the present invention;
FIG. 2 is a view for explaining a mixing and classifying principle of the first embodiment of the present invention;
FIG. 3 is a time chart showing an operation of the manufacturing apparatus in accordance with the first embodiment of the present invention;
FIG. 4 is a systematic view of a manufacturing apparatus in accordance with a second embodiment of the present invention;
FIG. 5 is a time chart showing an operation of the manufacturing apparatus in accordance with the second embodiment of the present invention;
FIG. 6 is a view for explaining a modified example of a sieve in accordance with the second embodiment of the present invention;
FIG. 7 is a view for explaining a modified example of a mixing part in accordance with the second embodiment of the present invention; and
FIG. 8 is a view for explaining a process of manufacturing a positive electrode material of a lithium ion battery of an embodiment in accordance with the present invention.

### [Mode for Implementing the Invention]

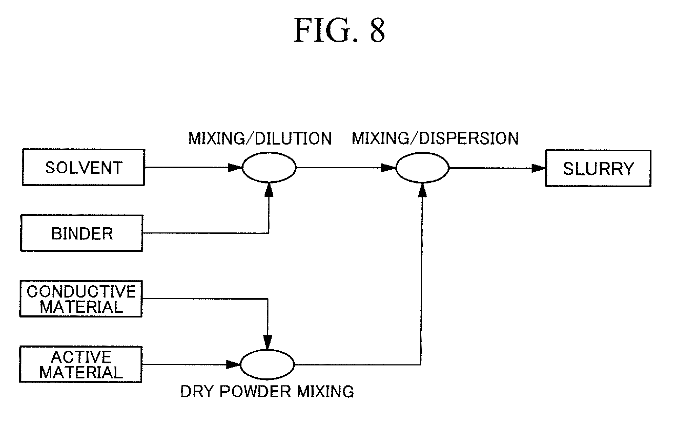

Hereinafter, embodiments of the present invention will be described with reference to the accompanying drawings.
First, a fundamental method of manufacturing a positive electrode material of a lithium ion battery will be described with reference to FIG. 8. In addition, hereinafter, while manufacture of the positive electrode material of the lithium ion battery is described, the present invention is not limited thereto but may be applied to manufacture of an electrode material of another battery.

First, a conductive material in a powder state and an active material in a powder state are dry-mixed to generate a mixture in which particles of the conductive material are attached to particles of the active material. Here, for example, acetylene black is used as the conductive material. In addition, in the conductive material, graphite (a particle size of about 4 µm) may be used together with acetylene black (a particle size of about 0.1 µm). Further, for example, LiCoO₂ or LiFePO₄(a particle size of about 10 µm), and the like is used as the active material.

Next, a binder is introduced into a solvent to mix the binder and the solvent. Here, for example, polyvinylidene fluoride, and the like is used as the binder, and, for example, N-methyl-2-pyrrolidinone is used as the solvent. In addition, while it has been described that the binder and the solvent are mixed after mixing the conductive material and the active material, any one of the mixing steps may be performed first.

Next, a mixture C of the conductive material (hereinafter referred to as AB) and the active material AM is introduced into the solvent with which the binder is mixed, and these are mixed to generate a slurry. A positive electrode core coated with the slurry becomes a positive electrode material of the lithium ion battery.

Hereinafter, various embodiments related to a process of generating the mixture C of the AB and the active material AM and a manufacturing apparatus used in the process will be described.

### [First Embodiment]

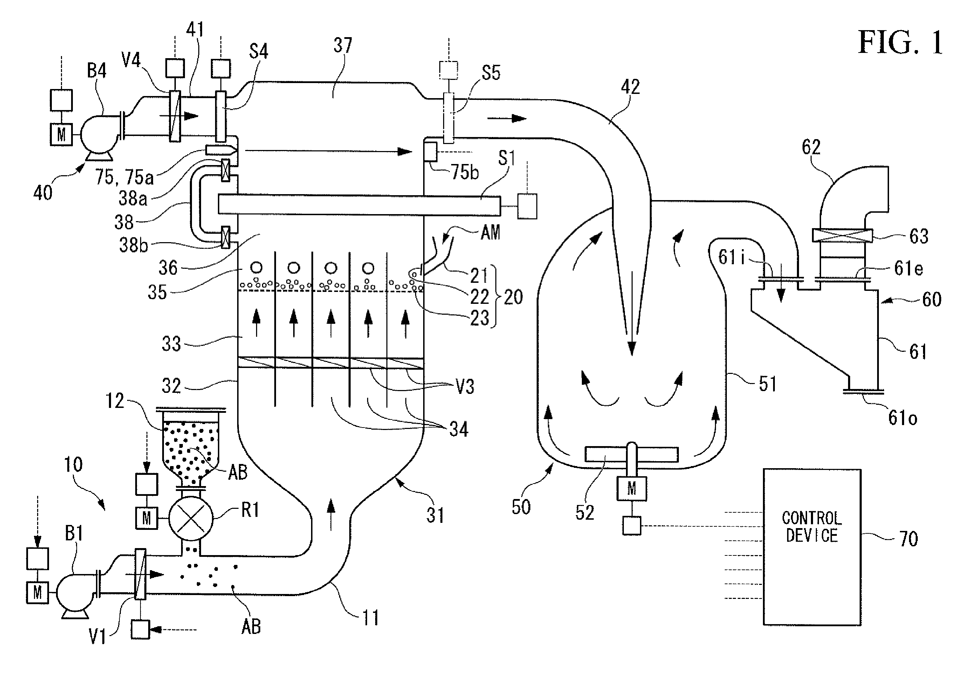

First, a first embodiment of the present invention will be described with reference to FIGS. 1 to 3.

A manufacturing apparatus of the embodiment, as shown in FIG. 1, includes a sieve 31 configured to mix an AB and an active material AM therein and classify a mixture C obtained by the mixing, a conductive material supply system 10 configured to supply an AB powder, which is a conductive material, into the sieve 31, an active material supply system 20 configured to supply a powder of the active material AM into the sieve 31 and temporarily maintain the active material AM in the sieve 31, a grinding system 50 configured to grind the mixture C from the sieve 31, a mixture conveyor system 40 configured to convey the mixture C in the sieve 31 to the grinding system 50, a control device 70 configured to control the above components, and a mixture container 61 configured to store the mixture C , which is passed through the grinding system 50.

The conductive material supply system 10 includes an AB line 11 configured to supply the AB into the sieve 31, an AB pot 12 configured to store the AB powder, an AB constant supply machine R1 configured to constantly supply the AB powder in the AB pot 12 to the AB line 11, an AB blower B1 configured to blow a gas to the AB line 11, and an AB gas flow rate controller V1 configured to control a flow rate of a gas flowing through the AB line 11.
A driving amount of each of the AB constant supply machine R1, the AB blower B1 and the AB gas flow rate controller V1 is controlled by the control device 70.

The AB line 11 has one end connected to the AB blower B1 and the other end connected to a lower portion of the sieve 31. The flow rate of a gas from the AB blower B1 is controlled by the AB gas flow rate controller V1, and the AB powder from the AB constant supply machine R1 is constantly supplied into the gas. The AB powder is gas-conveyed through the AB line 11 to be delivered into the sieve 31 from the lower portion of the sieve 31.

The active material supply system 20 includes an active material supply line 21 configured to supply a powder of the active material AM from a side of a middle body portion of the sieve 31, and a mesh 23 on which the powder of the active material supplied from the active material supply line 21 is placed.

An active material insertion port through which the powder of the active material AM is inserted is formed in an end of one side ofthe active material supply line 21. In addition, a butterfly valve 22 configured to allow an inflow from the active material insertion port into the sieve 31 and block an outflow from the sieve 31 to the active material insertion port and functioning as a check valve is installed at an end of the other side of the active material supply line 21.

The mesh 23 is disposed in the sieve 31 at a position lower than a connection part of the active material supply line 21 to the sieve 31, to be expanded in a horizontal direction. A hole diameter of the mesh 23 is sized such that the AB powder not exceeding a desired particle size range can pass therethrough and the active material powder exceeding the desired particle size range can be placed on an upper surface thereof. In addition, the desired particle size range of the AB powder is smaller than the desired particle size range of the active material powder by about one digit.

The sieve 31 has a straight body space 32 formed therein that has the same cross-sectional area regardless of the position from the lower portion in a vertical direction thereof at which the straight body space 32 is disposed. The AB line 11 is connected directly below the straight body space 32. A mixture transport space 37 is formed at the uppermost portion of the straight body space 32, a sieving space 36 is formed under the space 37, and further, a mixing space 35 is formed under the sieving space 36. The mesh 23 is disposed at the lowermost portion of the mixing space 35.

A lower space 33 lower than the sieving space 36 has a plurality of gas flow paths 34 extending in a vertical direction by partition members extending in the vertical direction. Here, even when the lower space 33 is partitioned using a plurality of plates as the partition members, the lower space 33 may be partitioned using a plurality of pipe lines as the partition members. Flow path/flow velocity controllers V3 are installed at the gas flow paths 34 to uniformize flow velocities between the gas flow paths 34, respectively. While valve opening angles of the flow path/flow velocity controllers V3 may be adjusted according to instructions from the control device 70, in this embodiment, the valve opening angles are manually adjusted. In the manual adjustment, flow velocities of the gas flow paths 34 are previously measured, and the valve opening angles are adjusted based on the measurement results. In addition, the above-described meshes 23 are disposed in the plurality of gas flow paths 34 and the active material supply lines 21 are connected to the plurality of gas flow paths 34, respectively.

In addition, here, the lower space 33 including the mixing space 35 disposed under the sieving space 36 is partitioned by the plurality of gas flow paths 34, a space under the mixing space 35 may be partitioned by the plurality of gas flow paths, and further, the sieving space 36 may be partitioned by the plurality of gas flow paths.

A space shutter S 1 configured to vertically partition the straight body space 32 is installed at a boundary between the sieving space 36 and the mixture transport space 37 or at an upper portion in the precipitation sieving space 36. The space shutter S 1 is driven according to an instruction from the control device 70. An upper space and a lower space of the space shutter S 1 are connected by a pressure equalizing pipe 38. Filters 38a and 38b configured to capture the mixture C are installed in the pressure equalizing pipe 38. The pressure equalizing pipe 38 is configured to remove a pressure difference between the upper space and the lower space of the space shutter S1 and prevent abrupt movement of a gas and particles between the upper space and the lower space when the space shutter S 1 is shifted from a closed state to an open state.

A particle size detector 75 configured to detect a particle size distribution of the mixture C is installed at a boundary between the sieving space 36 and the mixture transport space 37. The particle size detector 75 has a laser oscillating part 75a configured to emit laser light into the sieve 31, and a light receiving part 75b configured to receive the laser light from the laser oscillating part 75a. The control device 70 obtains Mie scattering intensity generated in the sieve 31 from light-received data in the light receiving part 75b, and acquires particle size distribution of the mixture C from the Mie scattering intensity. Then, in relation to the particle size distribution, the control device 70 outputs an instruction to increase a valve opening angle to the AB gas flow rate controller V1, which is a sieving space flow rate control means, such that a gas flow velocity in the sieve 31 is increased when the particle size should be increased, and outputs an instruction to reduce the valve opening angle to the AB gas flow rate controller V1, which is a sieving space flow rate control means, such that the gas flow velocity in the sieve 31 is reduced when the particle size should be reduced.

The mixture conveyor system 40 includes a gas feed line 41 configured to feed a carrier gas into the sieve 31, a conveyor line 42 configured to convey a gas from the sieve 31 and the mixture C included in the gas to the grinding system 50, a conveyance blower B4 configured to feed the gas into the gas feed line 41, a carrier gas flow rate controller V4 configured to adjust a gas flow rate flowing through the gas feed line 41. and a feed line shutter S4 configured to prevent the mixture C in the sieve 31 from flowing into the gas feed line 41. The driving amounts of each of the conveyance blower B4, the carrier gas flow rate controller V4 and the feed line shutter S4 are controlled by the control device 70.

In addition, a gas fed to the lines by the conveyance blower B4 and the AB blower B I is an inert gas such as nitrogen gas, and so on.

Both of a connecting port of the gas feed line 41 to the sieve 31 and a connecting port of the conveyor line 42 to the sieve 31 face the mixture transport space 37 of the sieve 31 and are opposite to each other. This is because a straight flow path is formed.

The grinding system 50 has a grinding container 51 and a grinder 52 having a grinding blade. The grinding blade of the grinder 52 is disposed at a lower portion in the grinding container 51. An upper portion of the grinding container 51 is connected to the mixture container 61. In addition, an end of the mixture conveyor line 42 is connected downward to the upper portion of the grinding container 51. An inner diameter of the end of the downwardly connected mixture conveyor line 42 is smaller than that of the connecting port of the mixture conveyor line 42 to the sieve 31.

A mixture inlet 61i, a mixture outlet 61o and an exhaust port 61e are installed in the mixture container 61. The grinding container 51 is connected to the mixture inlet 61i. In addition, an exhaust line 62 is connected to the exhaust port 61e. A filter 63 configured to prevent discharge of the mixture is installed at the exhaust line 62.

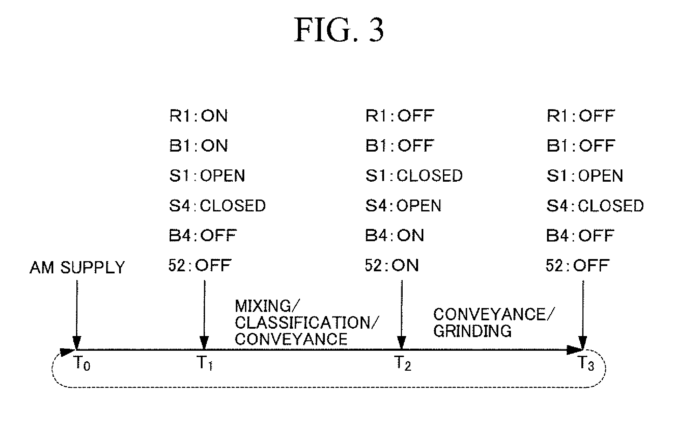

Next, an operation of the manufacturing apparatus described above will be described with reference to a time chart shown in FIG. 3.

First, the powder of the active material AM is introduced from the active material insertion port of the active material supply line 21, and the powder of the active material AM is placed on the mesh 23 installed in each of the gas flow paths 34 (T₀). In addition, here, while introduction of the powder of the active material AM is manually performed, a constant supply machine may be installed at each of the active material supply lines 21 and the constant supply machine of each of the active material supply lines 21 may be driven according to an instruction from the control device 70 so that introduction of the powder of the active material AM from the active material supply line 21 can be realized.

Next, according to the instruction from the control device 70, the AB constant supply machine R1 and the AB blower B1 are driven (T₁). At this time (T₁), the valve opening angles of the flow path/flow velocity controllers V3 are installed at the gas flow paths 34 in the sieve 31 are pre-set such that flow velocity is uniformized between the gas flow paths 34, respectively. In addition, the space shutter S1 is in an open state, and the line shutter S4 is in a closed state. Further, the conveyance blower B4 and the grinder 52 are not driven.

When the AB constant supply machine R1 and the AB blower B1 are driven, the AB powder from the AB constant supply machine R1 is introduced into the AB line 11, and simultaneously, a gas is fed into the AB line 11 from the AB blower B1. As a result, the gas including the AB powder is introduced into the sieve 31 from the AB line 11.

The gas including the AB powder introduced into the sieve 31 rises in the sieve 31 to pass through the mesh 23 in the sieve 31.

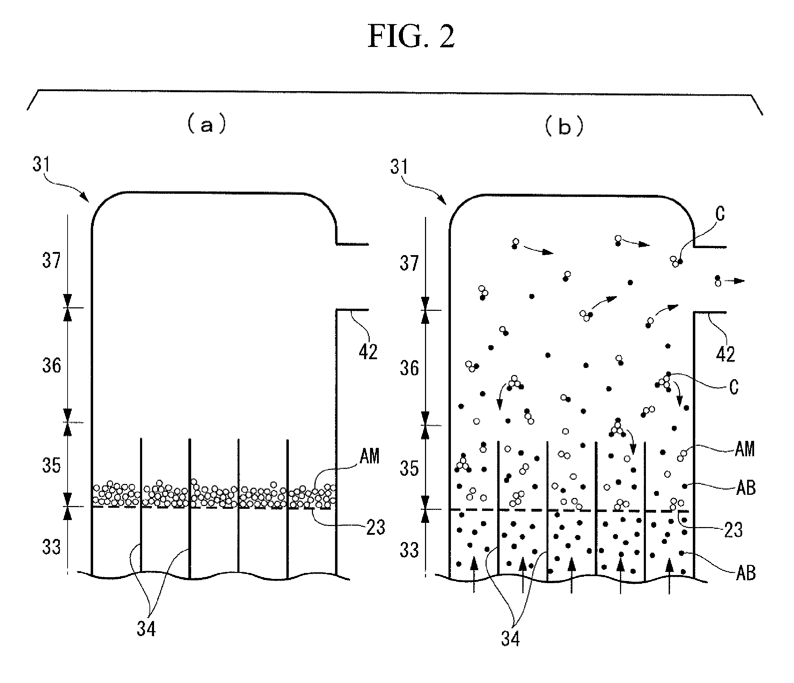

Here, phenomena in the mixing space 35, the sieving space 36 and the mixture transport space 37 over the mesh 23 in the sieve 31 will be described with reference to FIG. 2.

As shown in FIG. 2(a), the powder of the active material AM is placed on the mesh 23 disposed at the lowermost portion of the mixing space 35. When the gas flows into the mixing space 35 from a lower side via the mesh 23, as shown in FIG. 2(b), the powder of the active material AM placed on the mesh 23 floats, the AB powder (in the mixing space 35, the AB powder is already evenly present in the gas) included in the gas from the lower side is blown into the floated powder of the active material AM, both of them are mixed, and the AB particles are attached to the particles of the active material AM, generating particles of the mixture C. During flotation (including rotational movement) of the grains of the active material of a source material, as the AB particles mixed with the gas contacts, the AB particles can be uniformly attached to the entire circumferences of the grains.

As described above, in this embodiment, since, in a state in which the powder of the active material AM and the AB powder are dispersed in the gas, both of the powders are mixed, uniform mixing of the powder of the active material AM and the AB powder can be performed. That is, in this embodiment, among the particles ofthe active material AM, an amount of particles to which the AB particles are not attached can be extremely reduced.

The particles of the mixture C generated in the mixing space 35 float in the sieving space 36. In this process, the particles of the mixture C having a large particle size, for example, a large number of grains of the active material, are attached to each other to become lumps having an increased particle size, and the lumps are lowered because the gravitational force exceeds a raising force applied by the gas. Meanwhile, the particles of the mixture C having a small particle size are continuously raised with the gas to enter the grinding container 51 from the conveyor line 42 via the mixture transport space 37 (classified using a difference in precipitation speed according to the particle sizes), because the raising force applied by the gas exceeds the gravitational force. Among particles of the mixture C introduced into the grinding container 51, some of the particles having a relatively small particle size may be introduced into the mixture container 61 from the grinding container 51, and some of the remainder may remain in the grinding container 51.

As described above, in this embodiment, when the AB constant supply machine R1 and the AB blower B1 are driven (T₁), a supply process of the AB powder, a mixing process of the powder of the active material AM and the AB powder, a classification process of the particles of the mixture C generated by the mixing, and a conveyance process of the particles of the mixture C after classification are performed.

Here, in the classification process of the particles of the mixture C, as described above, a particle size distribution of the particles of the mixture C is detected by the particle size detector 75 installed at the boundary between the sieving space 36 and the mixture transport space 37.

When the particle size distribution shows that a large amount of particles having a particle size larger than a desired particle size range of the mixture C are distributed, the control device 70 outputs an instruction to reduce a valve opening angle to the AB gas flow rate controller V1, which is a sieving space flow rate adjustment means, so that a gas flow velocity in the sieve 3131 is reduced. In addition, when the detected particle size distribution shows that a large amount of particles having a particle size smaller than a desired particle size range (for example, a particle size of about 30 µm to 50 µm) of the mixture C are distributed, the control device 70 outputs an instruction to increase the valve opening angle to the AB gas flow rate controller V1, which is a sieving space flow rate adjustment means, so that a gas flow velocity in the sieve 31 is increased. As a result, in the particles of the mixture C introduced into the mixture transport space 37 via the sieving space 36, the particles in the desired particle size range are increased, and particles larger than the desired particle size range are reduced. In particular, particles having a particle size larger than the maximum particle size in the desired particle size range by one digit are extremely reduced.
In addition, when the desired particle size is about 50 µm, if the particle size of the active material of the source material is about 10 µm, it means that about 100 or more grains are attached to form one lump.
When there is also a lump at which the AB is uniformly attached equally to the circumference thereof, the lump to which about 100 or more grains are attached is also included, wherein the AB is uniformly attached equally to the circumference of one grain. In any case, since the mixture C in a state in which the AB is uniformly attached equally to the circumference of the lump having a desired particle size can be extracted, when a slurry is then generated using the mixture C, the problem in which the conductive material can be attached only to a portion of the circumference of the active material having a desired particle size can be solved.

In addition, upon the classification, a flow velocity distribution of a flow path cross-section in the sieving space 36 is an important parameter to increase classification precision. In general, when a fluid flows into a flow path, a flow velocity adjacent to a wall surface forming the flow path is reduced, and thus, a flow velocity around a center of the flow path, which is not influenced by a resistance from the wall surface, is increased. For this, when a flow path cross-sectional area is relatively wide like an inner space of the sieve 31, a width of the flow velocity distribution in the flow path cross-section is increased. As described above, when the width of the flow velocity distribution in the flow path cross-section is increased, the dispersion of a classification size is increased, and as a result, the classification precision is decreased.

Here, in this embodiment, the plurality of gas flow paths 34 are formed at the lower space 33 under the sieving space 36, and flow velocities between the gas flow paths 34 are uniformized by the flow path/flow velocity controllers V3 installed in the gas flow paths 34, respectively. For this reason, in this embodiment, since the flow velocity distribution in the flow path cross-section of the sieving space 36, i.e., a width of the flow velocity distribution in a horizontal direction, is reduced, the classification precision can be increased.

In the control device 70, after the AB constant supply machine R1 and the AB blower B1 are driven (T₁), when a predetermined time in which it is assumed that mixing of the powder of the active material AM and the AB powder is completed has elapsed, the AB constant supply machine R1 and the AB blower B1 are stopped, and the conveyance blower B4 and the grinder 52 are driven. Further, the space shutter S1 is in a closed state, and the line shutter S4 is in an open state (T₂).

When the AB constant supply machine R1 and the AB blower B1 and the space shutter S1 are in a closed state, the particles of the mixture C disposed under the space shutter S1 are instantly lowered to be placed on the mesh 23. Since the particles of the mixture C placed on the mesh 23 are particles that could not be raised to the mixture transport space 37 in the classification process, the particles have a particle size larger than that of the desired particle size range. Here, the particles of the mixture C remained on the mesh 23 are suctioned from the active material supply line 21 to be removed from the mesh 23.

In addition, when the space shutter S1 is in a closed state, the line shutter S4 is in an open state and the conveyance blower B4 is driven, the particles of the mixture C present in the mixture transport space 37 of the sieve 31 and the conveyor line 42 are introduced into the grinding container 51. Since the grinder 52 is driven in the grinding container 51, the particles of the mixture C colliding with the grinding blade of the grinder 52 are ground, and the particle size is further reduced. In this case, for example, since the lump, which is an active material of the source material, formed of 100 or more grains may be agglomerated with a plurality of lumps upon passing through the conveyor line 42, the grinding includes a process of decomposing the agglomerated lumps into individual lumps. Since the AB is attached equally to the circumference of one lump as described above, revolutions per minute (rpm) of the grinding blade are adjusted such that the AB attached to the individual lumps is entirely prevented from being peeled and falling off even when the decomposition is performed.

In the center portion of the grinding container 51 connected to the conveyor line 42, the flow becomes a flow in a lower portion by a gas from the conveyor line 42, and at an inner wall side of the grinding container 51, the flow becomes a flow in an upper side due to exhaust of the gas from the conveyor line 42 and a wind power by the grinding blade. For this reason, among the particles of the mixture C conveyed with the gas from the conveyor line 42, the particles having a relatively large particle size are ground by the grinder 52 installed at a lower portion of the grinding container 51, and after the particle size is reduced, are raised along the inner wall side of the grinding container 51 to be introduced into the mixture container 61. In addition, among the particles of the mixture C, the particles having a relatively small particle size do not reach the grinder 52 installed at the lower portion of the grinding container 51, and are raised along the inner wall side of the grinding container 51 to flow into the mixture container 61.

In addition, in this embodiment, the particles of the mixture C that have flowed into the grinding container 51 once flow backward due to the wind power of the grinding blade not to return to the conveyor line 42. This is because the conveyance blower B4 is also driven while the grinder 52 is driven, and a pressure in the conveyor line 42 is higher than that in the grinding container 51. In addition, this is because an inner diameter of a connection portion of the conveyor line 42 to the grinding container 51 is reduced and a gas velocity flowing into the grinding container 51 from the conveyor line 42 is increased. However, when the particles of the mixture C flowing into the grinding container 51 are likely to flow backward into the conveyor line 42, as shown in FIG. 1, a line shutter S5 may be installed at the conveyor line 42.

As described above, the AB is attached to the grains of the active material AM and the particles having a particle size equal to or less than the desired particle size range are extracted by the sieve 31. Even when the extracted particles are agglomerated, since the agglomerated particles are ground again by the grinder 52, the mixture C in the desired particle size range can be obtained.

As described above, when the conveyance blower B4 and the grinder 52 are driven (T₂), the conveyance process of the mixture C to the mixture container 61 and the grinding process of the mixture C are performed.

Since the control device 70 drives the conveyance blower B4 and the grinder 52 (T₂), when a predetermined time in which it is assumed that all the particles of the mixture C in the mixture transport space 37, in the conveyor line 42 and in the grinding container 51 are conveyed to the mixture container 61 elapses, the conveyance blower B4 and the grinder 52 are stopped, the space shutter S1 is in an open state and the line shutter S4 is in a closed state (T₃).

As described above, when the mixture generating process is completed and the mixture generating process is performed again, supply and processing of the AM T₀ is first started.

In this embodiment, in a state in which the powder of the active material AM and the AB powder are disposed in the gas, since both of the powders are mixed, the powder of the active material AM and the AB powder can be uniformly mixed.

### [Second Embodiment]

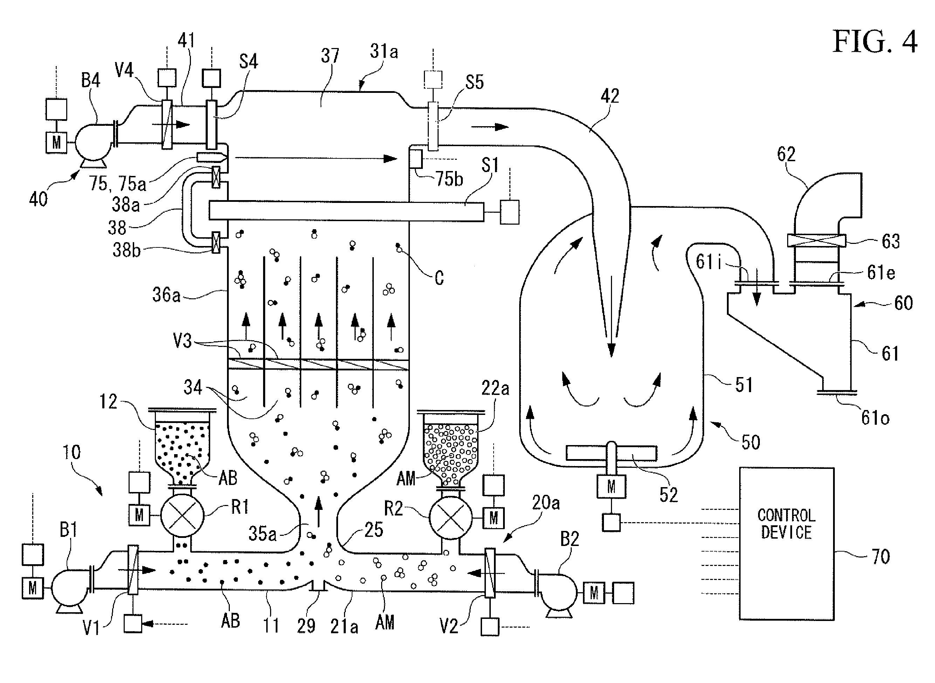

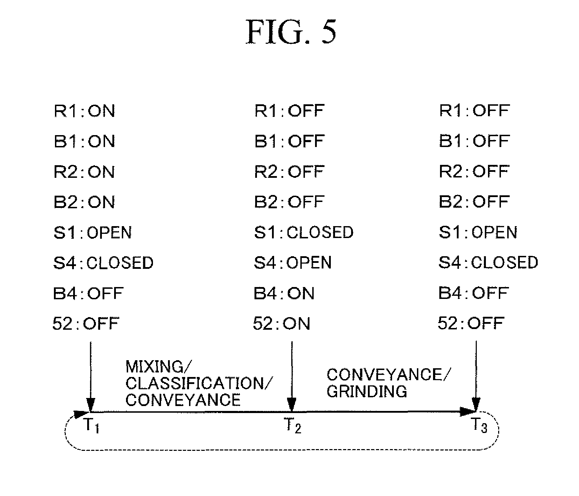

Hereinafter, a second embodiment of the present invention will be described with reference to FIGS. 4 and 5.

In this embodiment, as shown in FIG. 4, similar to the conductive material supply system 10, an active material supply system 20a configured to convey the powder of the active material AM with a gas flow is installed, the AB powder from the conductive material supply system 10 and the powder of the active material AM from the active material supply system 20a are mixed before introduction into a sieve 31 a, and the powder of the mixture C obtained by the mixing flows into the sieve 31a. For this reason, the mesh, and so on, 21, 22 and 23 of the active material supply system 20 of the first embodiment are not provided in this embodiment. In addition, the manufacturing apparatus of the present invention is basically the same as the manufacturing apparatus of the first embodiment, except for the above-mentioned features.

The active material supply system 20a of the embodiment includes an active material line 21 a configured to supply the active material AM into the sieve 31 a, an active material pot 22a in which the powder of the active material AM is stored, an active material constant supply machine R2 configured to constantly supply the powder of the active material AM in the active material pot 22a into the active material line 21a, a blower B2 for an active material configured to feed an inert gas such as nitrogen into the active material line 21a, and a gas flow rate controller V2 for an active material configured to adjust a flow rate of a gas flowing through the active material line 21 a.

All driving amounts of the active material constant supply machine R2, the blower B2 for an active material and the gas flow rate controller V2 for an active material are controlled by the control device 70.

The active material line 2 1 a has one end connected to the blower B2 for an active material and the other end connected to the AB line 11. The connecting portions configure a mixing part 25, and the mixing space 35a is formed therein. The mixing part 25 is connected to a lower portion of the sieve 31 a. The gas from the blower B2 for an active material is flow-rate-controlled by the gas flow rate controller V2 for an active material, and the powder of the active material AM from the active material constant supply machine R2 is supplied into the gas.

While the mixture transport space 37 is formed at the uppermost portion in the sieve 31 a of this embodiment, like the first embodiment, since the mixing part 25 is provided outside the sieve 31 a, a space under the mixture transport space 37 entirely configures the sieving space 36a.

Hereinafter, an operation of the manufacturing apparatus as described above will be described with reference to a time chart shown in FIG. 5.

First, according to an instruction from the control device 70, the AB constant supply machine R1 and the AB blower B1 are driven, and simultaneously, the active material constant supply machine R2 and the blower B2 for an active material are driven (T₁). At this time (T₁), the space shutter S1 is in an open state, and the line shutter S4 is in a closed state.
Further, the conveyance blower B4 and the grinder 52 are not driven.

When the AB constant supply machine R1 and the AB blower B1 are driven, a gas including the AB powder flows through the AB line 11. In addition, when the active material constant supply machine R2 and the blower B2 for the active material are driven, a gas including the powder of the active material AM flows through the active material line 21a. Since the AB line 11 and the active material line 21a are connected through the mixing part 25, both of the powders are mixed at the mixing space 35a in the mixing part 25, and the AB particles are attached to the particles of the active material AM, generating the particles of the mixture C.

As described above, even in this embodiment, in a state in which the powder of the active material AM and the AB powder float in the gas, since both of the powders are mixed, the powder of the active material AM and the AB powder can be uniformly mixed.

The particles of the mixture C generated in the mixing space 35a are introduced into the sieving space 36a of the sieve 31 a, and then, like the first embodiment, the particles are subjected to a classification operation. That is, the particles of the mixture C having a relatively small particle size are raised to the mixture transport space 37 in the sieve 31a, and the particles of the mixture C having a relatively large particle size cannot reach the mixture transport space 37. Similar to the first embodiment, the particles of the mixture C having a relatively small particle size and raised to the mixture conveyor line 42 are introduced into the grinding container 51 from the conveyor line 42. Among the particles of the mixture C introduced into the grinding contained 51, some of the particles having a relatively small particle size flow into the mixture container 61 from the grinding container 51, and some of the remainder remains in the grinding container 51.

As described above, in this embodiment, when the AB constant supply machine R1 and the AB blower B1 are driven, and simultaneously, the active material constant supply machine and the blower for the active material are driven (T₁), a supply process of the AB powder, a supply process of the active material AM, a mixing process of the powder ofthe active material AM and the AB powder, a classification process of the particles of the mixture C generated by the mixing, and a conveyance process of the particles of the mixture C after the classification are performed.

In addition, in this embodiment, the control device 70 controls the AB gas flow rate controller V1, which is a sieving space flow rate adjustment means, and a valve opening angle of a flow rate controller for an active material based on a detection result by the particle size detector 75.

The control device 70 drives the AB constant supply machine R1, the AB blower B1, the active material constant supply machine R2, and the blower B2 for an active material (T₁), supplies the powder of the active material AM and the AB powder in certain amounts or more, respectively, when a predetermined time in which it is assumed that the mixture C has been generated to a certain amount or more elapses, the AB constant supply machine R1, the AB blower B1, the active material constant supply machine R2, and the blower B2 for an active material are stopped, and simultaneously, the conveyance blower B4 and the grinder 52 are driven. Further, the space shutter S 1 is in a closed state, and the line shutter S4 is in an open state (T₂).

When the AB constant supply machine R1, the AB blower B1, the active material constant supply machine R2, and the blower B2 for an active material are stopped and the space shutter S 1 is in a closed state, the particles of the mixture C disposed under the space shutter S1 are immediately lowered, and are gathered in the mixing space 35a and outside the sieve 31a. Since the particles of the mixture C gathered in the mixing space 35a are particles that could not rise to the mixture transport space 37 in the classification process, the particles have a particle size larger than the desired particle size range. Here, a cover 29 of an exhaust port of the mixing part 25 is opened, and the particles of the mixture C gathered in the mixing space 35a are extracted.

In addition, when the space shutter S 1 is in a closed state, the line shutter S4 is in an open state and the conveyance blower B4 is driven, similar to the first embodiment, the particles of the mixture C present in the mixture transport space 37 of the sieve 31a and the conveyor line 42 flow into the grinding container 51. Since the grinder 52 is driven in the grinding container 51, the particles of the mixture C colliding with the grinding blade of the grinder 52 are ground to reduce the particle size thereof. Then, the particles of the mixture C flowing into the grinding container 51 flow into the mixture container 61 due to the wind power by the grinding blade of the grinder 52.

As described above, when the conveyance blower B4 and the grinder 52 are driven (T₂), a conveyance process of the mixture C into the mixture container 61 and a grinding process of the mixture C are performed.

Similar to the first embodiment, since the control device 70 drives the conveyance blower B4 and the grinder 52 (T₂), when a predetermined time in which it is assumed that all the particles of the mixture C in the mixture transport space 37, in the conveyor line 42 and in the grinding container 51 are conveyed to the mixture container 61 elapses, the conveyance blower B4 and the grinder 52 are stopped, the space shutter S1 is in an open state and the line shutter S4 is in a closed state (T₃).

As described above, when the mixture generating process is terminated and the mixture generating process is performed again, the above-mentioned process T1 is performed again.

Even in this embodiment, since both of the powders are mixed in a state in which the powder the active material AM and the AB powder are dispersed in the gas, the powder the active material AM and the AB powder may be uniformly mixed. Further, even in this embodiment, the particles of the mixture C that fall into the desired particle size range can be obtained by the classification and grinding. In addition, in this embodiment, since introduction of the active material AM into the gas flow path and introduction of the AB into the gas flow path are simultaneously performed, an implementation time of the mixture generating process can be reduced in comparison with the first embodiment.

### [Modified example]

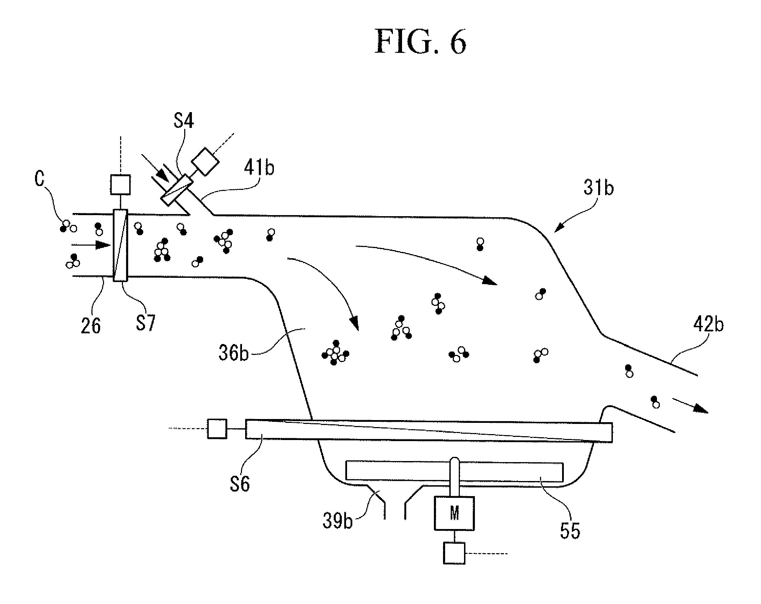

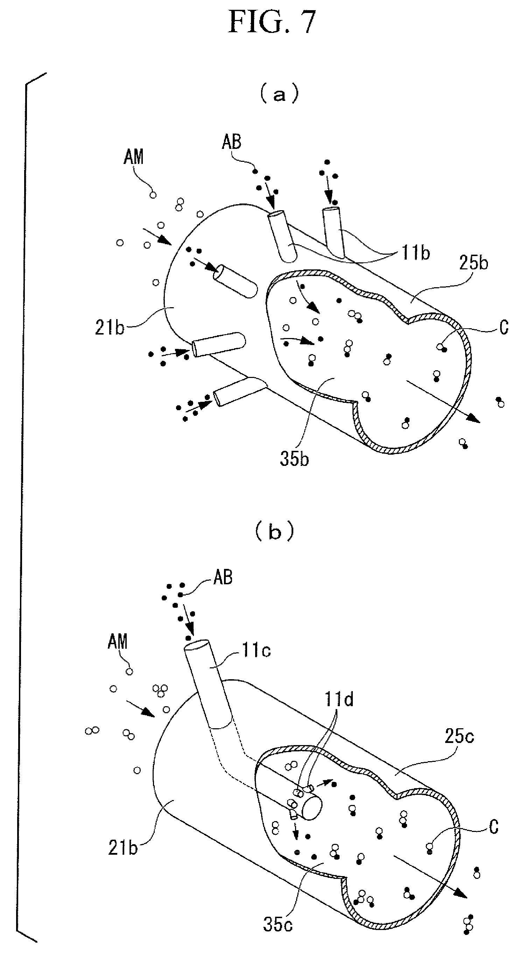

Hereinafter, a modified example of the sieve 31a and the mixing part 25 of the second embodiment will be described with reference to FIGS. 6 and 7.

As shown in FIG. 6, a mixture line 26 into which the particles of the mixture C flow in a horizontal direction is connected to one side of a sieve 31 b of the modified example, and a conveyor line 42b from which the particles of the mixture C are discharged in the horizontal direction is connected to the other side thereof. The other end of the mixture line 26 is connected to the mixing part 25 of the second embodiment. While a connecting portion of the mixture line 26 to the sieve 31b and a connecting portion of the conveyor line 42b to the sieve 31b are opposite to each other, the connection portion of the conveyor line 42 is disposed at a position lower than that of the mixture line 26.

A mixture line shutter S7 configured to cut introduction of the mixture C into the sieve 31b is installed at the mixture line 26. Further, a gas feed line 41b configured to feed a carrier gas into the sieve 3 I b is connected to the mixture line 26 at the sieve 31 b side, rather than a position at which the mixture line shutter S7 is installed. The feed line shutter S4 configured to cut introduction of the mixture C into the gas feed line 41b is installed at the gas feed line 41 b.

A sieving space 36b disposed in a horizontal direction, enlarged from the connecting portion of the mixture line 26 in a direction of the connecting portion of the conveyor line 42b and enlarged from the connecting portion of the mixture line 26 in the vertical direction, is formed in the sieve 31b.

A grinder 55 is installed at a lower portion of the sieving space 36b such that a grinding blade is disposed along a bottom surface of a space 36b thereof. In addition, a space shutter S6 configured to partition the space 36b into upper and lower portions is installed slightly over the grinder 55. Further, an exhaust port 39b configured to exhaust the powder of the mixture C is formed at a bottom of the sieve 31 b.

Next, together with an operation of an operation mechanism around the sieve 3 1 b, operations in the classification process and the conveyance process of the mixture C will be described.

First, the mixture line shutter S7 is in an open state, the feed line shutter S4 is in a closed state, the space shutter S6 is in an open state and the grinder 55 is in a stopped state. In this state, the powder of the mixture in the mixture line 26 flows into the sieving space 36b of the sieve 31 a with the gas from the mixture line 26.

A flow direction of the powder of the mixture C is in a substantially horizontal direction in the mixture line 26. However, when the powder of the mixture C flows into the sieving space 36b, a flow velocity is reduced due to enlargement of the flow path, an influence due to the gravitational force is increased, and an element in the vertical direction is added in the flow direction.

Since the precipitation speed is increased in the particles having a large particle size (or a heavy weight) among the particles of the mixture C, the particles of the mixture C having a relatively large particle size drop to the bottom of the sieving space 36b, rather than reaching the conveyor line 42b. Meanwhile, since the particles of the mixture C having a relatively small particle size have a deposit amount smaller than that of the particles of the mixture C having a relatively large particle size, the particles flow into the conveyor line 42b from the sieving space 36b.

As described above, when the mixture line shutter S7 is in an open state, the classification process and the conveyance process of the mixture C are performed.

Since the mixture line shutter S7 is in an open state, when a predetermined time in which it is assumed that the particles of the mixture C are fed into the sieve 31b to a predetermined amount elapses, the control device 70 drives the grinder 55 while the mixture line shutter S7 is in a closed state, the feed line shutter S4 is in an open state and the space shutter S6 is in a closed state.

When the grinder 55 is driven while the space shutter S6 is in a closed state, the particles of the mixture having a relatively large particle size gathered on the bottom surface of the sieving space 36b are ground and introduced into the exhaust port 39b, and discharged from the exhaust port 39b.

In addition, when the feed line shutter S4 is in an open state while the space shutter S6 is in a closed state, the particles of the mixture C having a relatively smaller particle size not present in a space in the sieving space 36b and over the space shutter S6 flow into the conveyor line 42b from the space 36b by the gas from the gas feed line 41 b.

As described above, when the feed line shutter S4 is in an open state while the space shutter S6 is in a closed state, the conveyance process of the mixture C is performed.

In addition, even in the modified example, in order to bring the particle size distribution of the mixture C near the desired particle size range, similar to the above embodiments, a particle size detector may be installed adjacent to the connecting portion of the carrier gas line 42b in the sieve 31b or in the carrier gas line 42b, and a flow velocity in the mixture line 26 may be controlled based on the result detected by the particle size detector.

Next, two modified examples of the mixing part 25 of the second embodiment will be described with reference to FIG. 7.

First, a first modified example of the mixing part will be described with reference to FIG. 7(a).
In the first modified example, one AB line provided in the second embodiment is branched into a plurality of AB lines 1 1b, 11b .... These branched AB lines 1 1b, 1 1b ... are connected to an outer circumference of the active material line 21 b such that a gas from these lines is directed from the outer circumference of an active material line 21b toward a center portion thereof.

In this modified example, the mixing part 25b is a portion of a downstream side from a position to which the plurality of branched AB lines 11b are connected, among the lines through which the active material AM passes.
As described above, in this modified example, since the AB powder is ejected in various directions of the space through which the powder of the active material AB flows, the powder of the active material AB and the AB powder can be more uniformly mixed.

Next, a second modified example of the mixing part will be described with reference to FIG. 7(b).
In this modified example, the AB line 11c formed in a radial direction is inserted into the active material line 21 b, and a front end of the AB line 1 1c is disposed at a center portion in the active material line 21 b. A plurality of nozzles 11d, 11d and 11d configured to eject the gas in a radial direction are installed at the front end of the AB line 11c.

In this modified example, the mixing part 25c is a portion of a downstream portion from a position of the nozzles 11d installed at the front end of the AB line 11c, among the lines through which the active material AM passes.
As described above, even in this modified example, similar to the first modified example, since the AB powder is ejected in various directions of the space through which the powder of the active material AM flows, the powder of the active material AM and the AB powder can be more uniformly mixed.

In addition, in both of the above modified examples, while the AB powder is ejected in various directions of the space through which the powder of the active material AM flows, the powder of the active material AM may be ejected in various directions of the space through which the AB powder flows.

### [Description of Reference Numerals]

10: Conductive material supply system
11: AB line
20, 20a: Active material supply system
21: Active material supply line
23: Mesh
25, 25b, 25c: Mixing part
31, 31a, 31b: Sieve
32: Straight body space
33: Lower space
34: Gas flow path
35, 35a, 35b, 35c: Mixing space
36, 36a, 36b: Sieving space
37: Mixture transport space
40: Mixture conveyance system
41, 41b: Gas feed line
42, 42b: Conveyor line
50: Grinding system
51: Grinding container
52, 55: Grinder
61: Mixture container
70: Control device
75: Particle size detector
R1: AB constant supply machine
B1: AB blower
B2: Active material blower
B4: Conveyor blower
V1: AB gas flow rate controller
V2: Active material gas flow rate controller
V4: Carrier gas flow rate controller
S1, S6: Space shutter
S4: Feed line shutter
AM: Active material
AB: Conductive material

## Claims

1. An apparatus for manufacturing an electrode material, comprising:
a first mixed gas blowing part configured to blow a first mixed gas, in which a conductive material powder is mixed with a first gas, at a predetermined pressure;
an active material powder floating part configured to float an active material powder;
a mixing part configured to spray the first mixed gas to the floated active material powder and to generate a mixture in which the conductive material powder is attached to the active material powder; and
an extracting part configured to extract a mixture having a predetermined particle size from the mixture using a difference in precipitation speed according to the particle size.

2. The apparatus for manufacturing an electrode material according to claim 1, wherein the active material powder floating part comprises a blowing part configured to blow a second mixed gas, in which the active material powder is mixed with a second gas, at a predetermined pressure, and the spraying is performed on the second mixed gas to generate the mixture.

3. The apparatus for manufacturing an electrode material according to claim 1 or 2, wherein the mixing part comprises a plurality of gas flow paths through which the first mixed gas passes.

4. The apparatus for manufacturing an electrode material according to claim 3, wherein the first and second gases are the same inert gas.

5. The apparatus for manufacturing an electrode material according to claim 4, further comprising a grinding part connected to the extracting part and configured to recompose at least some of the extracted mixture.
